# EUROPEAN PATENT APPLICATION

(11) **EP 4 596 494 A1**
(43) Date of publication of application: **06.08.2025**
(21) Application number: 24184615.3
(22) Date of filing: 26.06.2024
(51) Int. Cl.: C01B 25/37, H01M 4/02, H01M 10/0525

(54) **PREPARATION METHOD FOR LITHIUM IRON PHOSPHATE MATERIAL WITH LOW IRON PHOSPHIDE CONTENT, AND USE OF LITHIUM IRON PHOSPHATE MATERIAL**

(30) Priority: 30.01.2024 CN 202410130928
(71) Applicant: HUBEI RT ADVANCED MATERIALS GROUP COMPANY LIMITED, Daye City Huangshi, Hubei 435100 (CN)
(72) Inventor: Sun, Jie, Huangshi, 435100 (CN); Zhao, Yue, Huangshi, 435100 (CN); Lin, Shuo, Huangshi, 435100 (CN); He, Zhonglin, Huangshi, 435100 (CN); He, Jianhao, Huangshi, 435100 (CN); Liu, Chao, Huangshi, 435100 (CN); Huang, Ran, Huangshi, 435100 (CN); Liu, Wenchao, Huangshi, 435100 (CN); Ren, Jun, Huangshi, 435100 (CN)
(74) Representative: Cleanthous, Marinos

(57) **Abstract**

A preparation method for a lithium iron phosphate material with low iron phosphide content is provided, including the following steps: mixing and dissolving anhydrous iron phosphate with a lithium source, a carbon source, a dopant and deionized water to obtain a mixed solution; conducting wet grinding and spray drying on the mixed solution to obtain a sintering precursor; conducting heat treatment and pulverization on the sintering precursor to obtain a lithium iron phosphate material, where the heat treatment process includes preheating, low-temperature sintering, high-temperature sintering, and cooling, a preheating temperature is lower than a low-temperature sintering temperature, the low-temperature sintering temperature is lower than a high-temperature sintering temperature, and a cooling temperature is lower than the high-temperature sintering temperature. The heat treatment process is conducted under a rare gas atmosphere, and the rare gas content in the high-temperature sintering is greater than that in the low-temperature sintering. Compared with the conventional process, the lithium iron phosphate material has high purity, remarkably reduces the iron phosphide content, maintains a high compaction density, and has excellent electrochemical performance. A lithium iron phosphate material and a lithium-ion battery using the lithium iron phosphate material are further provided.

## Description

### TECHNICAL FIELD

The present disclosure relates to the technical field of batteries, and in particular to a preparation method for a lithium iron phosphate material with low iron phosphide content, the lithium iron phosphate material, and a lithium-ion battery.

### BACKGROUND

As the representative of secondary batteries with the best comprehensive performance at present, the commercialization of lithium-ion batteries can be traced back to the 1990s. After years of research, lithium iron phosphate materials have become a technical route with better performance in the field of lithium-ion batteries.

Lithium iron phosphate, as a lithium-ion battery cathode material, has become a strong competitor of batteries for electric vehicles with the advantages of high voltage, high specific capacity, long cycle life, small volume and low cost. However, factors such as poor electronic conductivity and low ionic conduction coefficient limit the performance of the lithium iron phosphate material, while carbon coating, as one of the main modification methods for the lithium iron phosphate material, can effectively improve its conductivity. Carbon coating of the lithium iron phosphate material needs to be conducted under high temperature and strong reducing environment (such as C, CO or H₂), which makes the reaction kinetics between the lithium iron phosphate material and the selected carbon interface extremely intense, easily leading to the formation of secondary phase on the interface, and finally changing the conductivity of ions and electrons in the lithium iron phosphate material. The lithium iron phosphate material is about to generate different secondary phases with the change of sintering temperature and atmosphere, e.g., magnetic ferrophosphorus compounds FeP, Fe₂P and Fe₃P, in which the impurity phase Fe₂P will also weaken the cycle performance of the battery prepared from a lithium iron phosphate material. Therefore, it is necessary to avoid the generation of iron phosphide in actual production.

A lithium iron phosphate material with low magnetic foreign matter and high compaction, a preparation method therefor and use thereof are provided by Chinese Patent CN116161638A. A lithium source, an iron source, a phosphorus source, a carbon source and a dopant, after being subjected to liquid-phase ball milling and drying, are sintered at high temperature for the first time, and then are pulverized to obtain first sintered powder. After determining the content of iron phosphide in the first sintered powder, the magnetic substance is dissolved with an acid solution, and then the lithium source, the phosphorus source and the carbon source are added according to the content of iron phosphide, and ball-milled until the particle size D50 of the slurry is 300-800 nm, and then dried and sintered at a low temperature for the second time to obtain a lithium iron phosphate material with the content of magnetic foreign matter within 100 ppb. Although the content of magnetic substance in the lithium iron phosphate can be reduced according to the method, the second sintering is required, leading to long process cycle; and the supplementary amounts of lithium source, phosphorus source and carbon source need to be determined according to the content of iron phosphide generated each time after the first sintering, leading to poor practicability, high production cost, and incapacity of meeting the requirements of industrial production. There is a lack of more effective technical means in the industry.

### SUMMARY

In view of above contents, the present disclosure is intended to at least solve one of the technical problems in the prior art. To this end, a preparation method for a lithium iron phosphate material with low phosphide content and use of the lithium iron phosphate material are provided. The temperature and gas content in the sintering process of the lithium iron phosphate are respectively regulated to ensure the efficient synthesis of lithium iron phosphate and prevent the lithium iron phosphate from being excessively reduced, thus improving the material purity, compaction density and electrochemical performance. Meanwhile, the preparation method for the lithium iron phosphate material is simple in process flow, and suitable for large-scale industrial production.

To this end, in a first aspect, a preparation method for a lithium iron phosphate material with low iron phosphide content is provided by an embodiment of the present disclosure. The preparation method includes the following steps:
S10: mixing and dissolving anhydrous iron phosphate with a lithium source, a carbon source, a dopant and deionized water according to a certain proportion to obtain a mixed solution;
S20: conducting wet grinding and spray drying on the mixed solution to obtain a sintering precursor; and
S30: conducting heat treatment and pulverization on the sintering precursor to obtain a lithium iron phosphate material, where the heat treatment process includes preheating, low-temperature sintering, high-temperature sintering, and cooling, a preheating temperature is lower than a low-temperature sintering temperature, the low-temperature sintering temperature is lower than a high-temperature sintering temperature, and a cooling temperature is lower than the high-temperature sintering temperature; the heat treatment is conducted under a rare gas atmosphere, and rare gas content in high-temperature sintering is greater than that in low-temperature sintering.

Preferably, the preheating temperature is 300°C-550°C, the low-temperature sintering temperature is 680°C-775°C, the high-temperature sintering temperature is 776°C-820°C, and the cooling temperature is 300°C-720°C.

Low-temperature sintering time is longer than preheating time, high-temperature sintering time and cooling time, respectively; preferably, the preheating time is 2-3 h, the low-temperature sintering time is 6-10 h, the high-temperature sintering time is 2-6 h, and the cooling time is 2-3 h.

Preferably, the rare gas atmosphere includes nitrogen, nitrogen content in a high-temperature sintering atmosphere is more than 96%, and nitrogen content in a low-temperature sintering atmosphere is more than 94.5%.

Preferably, the heat treatment further includes detecting content of other gases in the rare gas atmosphere, and the other gases include at least one of oxygen, carbon oxide, carbon dioxide, and hydrogen.

Preferably, the heat treatment is conducted in a nitrogen sealed roller-hearth furnace, which includes a front gas replacement chamber, a preheating section, a low-temperature sintering section, a high-temperature sintering section, a cooling section, a rear gas replacement chamber, and a heating and roller bar window. Gas intake of a nitrogen main pipe of the roller-hearth furnace is from 290 Nm³/h to 330 Nm³/h, nitrogen intake at the front gas replacement chamber accounts for 8%-10% of total gas intake, nitrogen intake at the preheating section accounts for 10%-20% of the total gas intake, nitrogen intake at the low-temperature sintering section accounts for 15%-20% of the total gas intake, nitrogen intake at the high-temperature sintering section accounts for 20%-25% of the total gas intake, nitrogen intake in the cooling section accounts for 8%-12% of the total gas intake, nitrogen intake at the rear gas replacement chamber accounts for 8%-15% of the total gas intake, and nitrogen intake at the heating and roller bar window accounts for 8%-12% of the total gas intake.

Preferably, a temperature set in the preheating section gradually increases with a feeding direction, a temperature set in each of the low-temperature sintering section and the high-temperature sintering section keeps constant with the feeding direction, and a temperature set in the cooling section gradually decreases with the feeding direction.

Preferably, an iron-phosphorus molar ratio Fe/P of the anhydrous iron phosphate is 0.96-0.98.

The lithium source at least one of lithium carbonate, lithium phosphate, and lithium hydroxide, a molar ratio Li/Fe of the lithium source to the iron phosphate is 1.01-1.07.

The carbon source includes at least one of glucose, sucrose, polyethylene glycol, and citric acid. An adding amount of the carbon source satisfies a target that carbon content of the prepared lithium iron phosphate material is 1.0 wt%-1.8 wt%.

The dopant includes at least one of titanium dioxide, and ammonium metavanadate; and an adding amount of titanium dioxide and ammonium metavanadate accounts for 0.05 wt%-0.20 wt% of the mass of iron phosphate.

Preferably, the wet grinding is conducted at a temperature of 30°C-45°C, a grinding particle size D50 is less than 0.5 µm, and solid content is 30 wt%-45 wt%.

In the spray drying, an air inlet temperature is 180°C-240°C, an air outlet temperature is 90°C-110°C, a particle size D50 of an intermediate product obtained by spray drying is 20 µm-45 µm, and a moisture content is less than or equal to 1.5%.

In a second aspect, a lithium iron phosphate material is provided by an embodiment of the present disclosure. The lithium iron phosphate material is prepared by the preparation method of the first aspect.

In a third aspect, a lithium-ion battery is further provided according to an embodiment of the present disclosure, including a battery cathode prepared from the lithium iron phosphate material of the second aspect.

Compared with the prior art, the present disclosure has the following beneficial effects:

According to the method provided by the present disclosure, the temperature and atmosphere in the first sintering process of the lithium iron phosphate are regulated according to generation conditions of the iron phosphide, so as to effectively reduce the iron phosphide content in the lithium iron phosphate. According to this sintering control method, the preparation of the lithium iron phosphate with low magnetic substance is achieved without selecting different raw materials or adding complex complicated demagnetization and secondary sintering procedures. The process is simple, the production can be conducted using an original production line, with low cost and strong practicability.

According to the method disclosed by the present disclosure, the lithium iron phosphate material is sintered in sections by providing a low-temperature section and a high-temperature section at different time, on the one hand, the lithium iron phosphate material is prevented from being reduced to iron phosphide when sintered for a long time at a temperature exceeding a decomposition temperature; on the other hand, because the lithium iron phosphate material precursor powder has temperature gradients at different positions in a sagger, when the sintering temperature changes, the lithium iron phosphate material on a surface layer of the sagger is subjected to more heat change in comparison with that on a middle layer of the sagger, such that larger lithium iron phosphate material particles are easier to form on the surface layer, while small lithium iron phosphate material particles are easier to form on the middle layer, a large range of proportional grading of large and small particles is achieved, and the compaction density and specific capacity of the lithium iron phosphate material are improved.

According to the method for controlling the sintering atmosphere provided by the present disclosure, it is unnecessary to increase the flow rate of a nitrogen main pipe by increasing the cost; the nitrogen flow rate at each region is reasonably distributed by adjusting a gas inlet device and an exhaust device of a roller-hearth furnace to improve the proportion of the nitrogen flow rate in the high-temperature sintering section, thus reducing the content of reducing gases such as CO and Hz when the lithium iron phosphate material is located in the high-temperature sintering section, and further preventing the lithium iron phosphate material from being reduced to iron phosphide in the process of forming large particles by high-temperature sintering.

### BRIEF DESCRIPTION OF THE DRAWINGS

FIG. 1 is a flow diagram of a preparation method for a lithium iron phosphate material according to an embodiment of the present disclosure;
FIG. 2 is an SEM (Scanning Electron Microscopy) image of a lithium iron phosphate material prepared according to Embodiment 1 of the present disclosure;
FIG. 3 is an SEM image of a lithium iron phosphate material prepared according to Comparative example 1 of the present disclosure;
FIG. 4 is an SEM pattern of a lithium iron phosphate material prepared according to Comparative example 2 of the present disclosure;
FIG. 5 is an XRD (X-Ray Diffraction) pattern of a lithium iron phosphate material prepared according to Embodiment 1 and Comparative example 1 of the present disclosure.

### DETAILED DESCRIPTION OF THE EMBODIMENTS

The embodiments of the present disclosure are described in detail below. Examples of the embodiments are shown in the accompanying drawings, and the same or similar reference numerals throughout this specification represent the same or similar elements or elements having the same or similar functions. The embodiments described below in conjunction with the drawings are illustrative, and are intended to illustrate the present disclosure, and cannot be construed as the limitations of the present disclosure.

The following disclosure provides many different embodiments or examples for implementing different structures of the present disclosure. To simplify the present disclosure, components and arrangements of particular examples are described below. Certainly, the components and arrangements are only examples and are not intended to limit the present disclosure. In addition, reference numerals and/or letters may be repeated in different examples according to the present disclosure. Such a repetition is for simplicity and clarity, and does not in itself indicate the relationship between the various embodiments and/or arrangements discussed. Furthermore, the present disclosure provides examples of various particular processes and materials, but those of ordinary skill in the art can realize the applicability of other processes and/or the use of other materials.

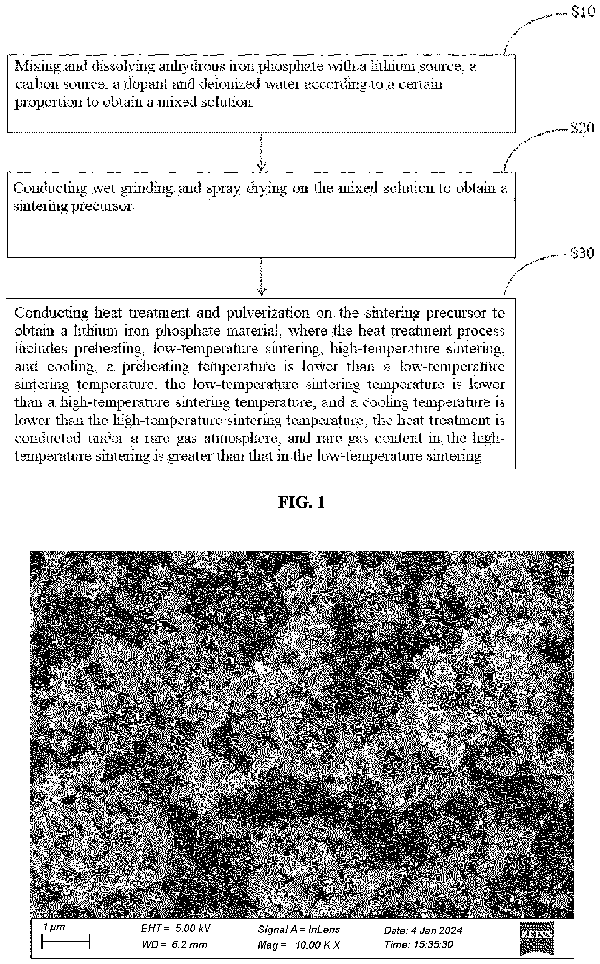

Please referring to FIG. 1, in a first aspect, a preparation method for a lithium iron phosphate material with low iron phosphide content is provided by an embodiment of the present disclosure. The preparation method includes the following steps:
S10. Anhydrous iron phosphate, a lithium source, a carbon source, a dopant and deionized water are mixed and dissolved according to a certain proportion to obtain a mixed solution.
S20. The mixed solution is subjected to wet grinding and spray drying to obtain a sintering precursor.
S30. The sintering precursor is subjected to heat treatment and pulverized to obtain a lithium iron phosphate material, where the heat treatment process includes preheating, low-temperature sintering, high-temperature sintering, and cooling. A preheating temperature is lower than a low-temperature sintering temperature, the low-temperature sintering temperature is lower than a high-temperature sintering temperature, and a cooling temperature is lower than the high-temperature sintering temperature. The heat treatment is conducted under a rare gas atmosphere, and rare gas content in high-temperature sintering is greater than that in low-temperature sintering.

In this embodiment, Step S30 is conducted in a roller-hearth furnace, the roller-hearth furnace is provided with a preheating section, a low-temperature sintering section, a high-temperature sintering section and a cooling section in a feeding direction, which correspond to a preheating process, a low-temperature sintering process, a high-temperature sintering process, and a cooling process, respectively. It may be understood that the material sintering process may be conducted in other sintering furnaces, and the temperature of the sintering furnace can be set according to the preheating, low-temperature sintering, high-temperature sintering and cooling. In addition, different rare gas content can be set for high-temperature sintering and low-temperature sintering, and different sintering temperatures are combined with different rare gas atmospheres to effectively improve the sintering effect, thus avoiding the generation of iron phosphide, and maintaining high purity and high compactness of the material.

Further, the preheating temperature is 300°C-550°C, the low-temperature sintering temperature is 680°C-775°C, the high-temperature sintering temperature is 776°C-820°C, and the cooling temperature is 300°C-720°C.

Further, the low-temperature sintering time is longer than preheating time, high-temperature sintering time and cooling time, respectively. Preferably, the preheating time is 2-3 h, the low-temperature sintering time is 6-10 h, the high-temperature sintering time is 2-6 h, and the cooling time is 2-3 h.

Further, the rare gas atmosphere includes nitrogen, nitrogen content in a high-temperature sintering atmosphere is more than 96%, and nitrogen content in a low-temperature sintering atmosphere is more than 94.5%.

Further, the heat treatment further includes detecting the content of other gases in the rare gas atmosphere, and the other gases include at least one of oxygen, carbon oxide, carbon dioxide, and hydrogen. It may be understood that whether the control of the rare gas content is effective or not is confirmed by detecting the content of other gases. Specifically, in the low-temperature sintering section, the nitrogen content is ≥94.5%, the carbon monoxide content is ≤0.6%, the hydrogen content is ≤0.7%, and the oxygen content is ≤ 0.5%; and in the high-temperature sintering section, the nitrogen content is ≥96%, the carbon monoxide content is ≤0.4%, the hydrogen content is ≤0.7%, and the oxygen content is ≤0.5%.

Further, the heat treatment is conducted in a nitrogen sealed roller-hearth furnace, which includes a front gas replacement chamber, a preheating section, a low-temperature sintering section, a high-temperature sintering section, a cooling section, a rear gas replacement chamber, and a heating and roller bar window. Gas intake of a nitrogen main pipe of the roller-hearth furnace is from 290 Nm³/h to 330 Nm³/h, nitrogen intake at the front gas replacement chamber accounts for 8%-10% of total gas intake, nitrogen intake at the preheating section accounts for 10%-20% of the total gas intake, nitrogen intake at the low-temperature sintering section accounts for 15%-20% of the total gas intake, nitrogen intake at the high-temperature sintering section accounts for 20%-25% of the total gas intake, nitrogen intake in the cooling section accounts for 8%-12% of the total gas intake, nitrogen intake at the rear gas replacement chamber accounts for 8%-15% of the total gas intake, and nitrogen intake at the heating and roller bar window accounts for 8%-12% of the total gas intake.

Further, a temperature set in the preheating section gradually increases with a feeding direction, a temperature set in each of the low-temperature sintering section and the high-temperature sintering section keeps constant with the feeding direction, and a temperature set in the cooling section gradually decreases with the feeding direction.

Further, an iron-phosphorus molar ratio Fe/P of the anhydrous iron phosphate is 0.96-0.98.

Further, the lithium source includes at least one of lithium carbonate, lithium phosphate, and lithium hydroxide, a molar ratio Li/Fe of the lithium source to the iron phosphate is 1.01-1.07.

Further, the carbon source includes at least one of glucose, sucrose, polyethylene glycol, and citric acid, an adding amount of the carbon source satisfies a target that carbon content of the prepared lithium iron phosphate material is 1.0 wt%-1.8 wt%.

Further, the dopant includes at least one of titanium dioxide, and ammonium metavanadate; and an adding amount of titanium dioxide and ammonium metavanadate accounts for 0.05 wt%-0.20 wt% of the mass of iron phosphate.

Further, the wet grinding is conducted at a temperature of 30°C-45°C, a grinding particle size D50 is less than 0.5 µm, and solid content is from 30 wt% to 45 wt%.

Further, in the spray drying, an air inlet temperature is 180°C-240°C, an air outlet temperature is 90°C-110°C, a particle size D50 of an intermediate product obtained by spray drying is 20 µm-45 µm, and a moisture content is less than or equal to 1.5%.

In a second aspect, a lithium iron phosphate material is provided by an embodiment of the present disclosure. The lithium iron phosphate material is prepared by the preparation method of the first aspect.

In a third aspect, a lithium-ion battery is further provided according to an embodiment of the present disclosure, including a battery cathode prepared from the lithium iron phosphate material of the second aspect.

According to a preparation method for a lithium iron phosphate material with low iron phosphide content and use of the lithium iron phosphate material provided by the present disclosure, the temperature and gas content in the sintering process of the lithium iron phosphate are respectively regulated to ensure the efficient synthesis of lithium iron phosphate and prevent the lithium iron phosphate from being excessively reduced, thus improving the material purity, compaction density and electrochemical performance.

In the following, the specific process and effect of the preparation method for the lithium iron phosphate material of the present disclosure will be described in detail in conjunction with some specific embodiments, but are not limited to the scope of protection of the present disclosure.

### Embodiment 1

A lithium iron phosphate material is prepared in this embodiment, specifically including the following steps:
1. 160 kg of iron phosphate with a Fe/P molar ratio of 0.97, 41 kg of lithium carbonate, 13 kg of glucose, 7 kg of polyethylene glycol, 500 g of titanium dioxide, 150 g of ammonium metavanadate and deionized water are mixed and then subjected to sand milling at 30°C, and a sand-milling particle size D50 is controlled to be 0.33 µm to obtain a slurry A with solid content of 35 wt%.
2. The slurry A is subjected to spray drying, a spray inlet temperature is controlled to be 220°C and a spray outlet temperature is controlled to be 90°C, a particle size D50 of a spray particle is controlled to be 35 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 300°C, 370°C, 440°C and 500°C, a low-temperature sintering section with heating time of 6 h and temperature of 740°C, a high-temperature sintering section with heating time of 4 h and temperature of 810°C and a cooling section with heating time of 3 h and temperature gradually decreasing from 710°C, 640°C, 520°C and 390°C are provided in sequence in a feeding direction of the roller-hearth furnace.
4. After the sintering is started, the flow rate in a nitrogen main pipe is kept constant at 321 Nm³/h, the opening of a nitrogen inlet valve at each of the low-temperature sintering section and high-temperature sintering section is increased, and the opening of a nitrogen inlet valve in other temperature zones is appropriately reduced, making the nitrogen flow rates in a front gas replacement chamber, the preheating section, the low-temperature sintering section, the high-temperature sintering section, the cooling section, a rear gas replacement chamber and a heating and roller bar window be 8%, 12%, 20%, 25%, 12%, 12%, 11% of the total pipe flow rate, respectively. A position of the material is observed through an observation window of the roller-hearth furnace, when the material reaches the low-temperature sintering section and the high-temperature sintering section, respectively, the gas is extracted from the two heating sections to an aluminum foil gas bag with a capacity of 2L, and the gas composition and content in the gas bag are analyzed by GC-MS (Gas chromatograph-mass spectrometer). After adjusting the nitrogen flow rate in each temperature zone, the main gas content in the low-temperature sintering section is as follows: N₂ is 95.78%, Oz is 0.35%, CO is 0.52%, CO₂ is 2.28%, and H₂ is 0.51%; the main gas content in the high-temperature sintering section is as follows: N₂ is 97.97%, O₂ is 0.41%, CO is 0.38%, CO₂ is 0.26%, and H₂ is 0.64%.
5. A sintered material C obtained in Step 4 is subjected to air jet pulverization, and the particle size D50 is controlled to be 1.10 µm, so as to obtain a finished lithium iron phosphate product D with low iron phosphide content.

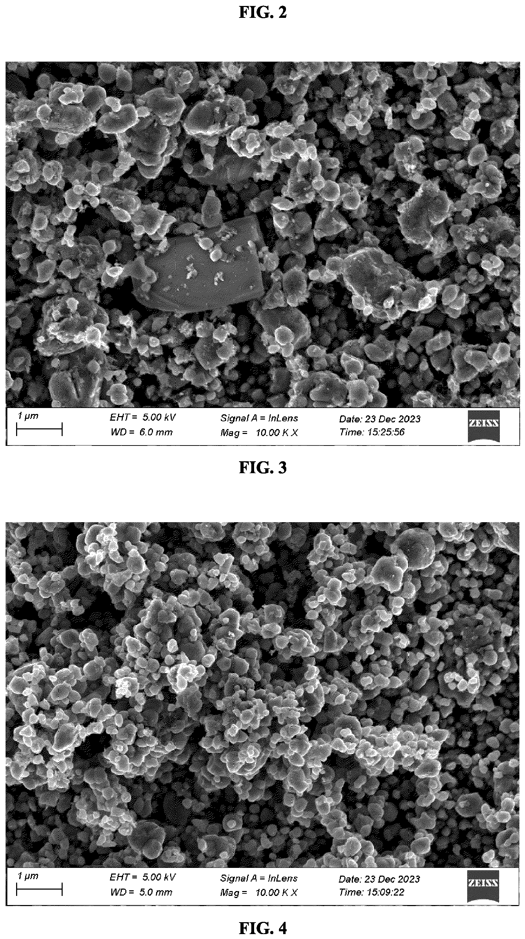

FIG. 2 is a SEM image of a lithium iron phosphate material with high compaction density prepared according to Embodiment 1. As can be seen from FIG. 2, the sphericity of primary particles is good, and the connection between large and small particles is close, showing a spherical structure similar to "pomegranate".

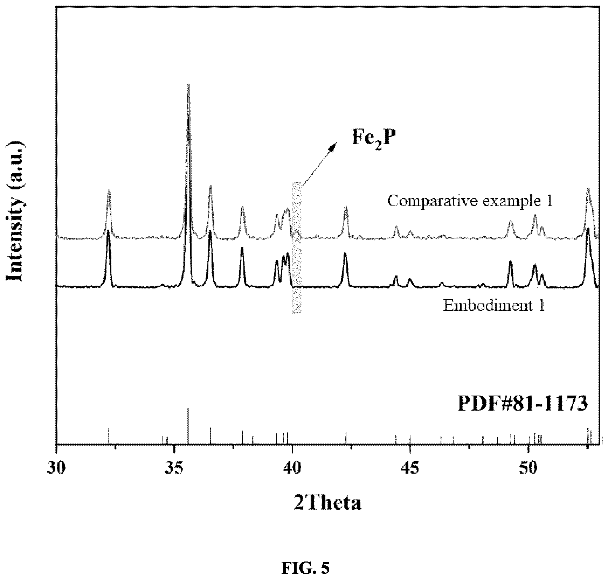

FIG. 5 is an XRD pattern of a lithium iron phosphate material with high compaction density prepared according to Embodiment 1. As can be seen from FIG. 5, a peak position in this image is consistent with a standard PDF card of the lithium iron phosphate, and there is no impurity phase, and the material purity is high.

### Embodiment 2

A lithium iron phosphate material is prepared in this embodiment, specifically including the following steps:
1. 180 kg of iron phosphate with a Fe/P molar ratio of 0.965, 45 kg of lithium carbonate, 10 kg of sucrose, 8 kg of citric acid, 600 g of ammonium metavanadate and deionized water are mixed and then subjected to sand milling at 30°C, a sand-milling particle size D50 is controlled to be 0.33 µm to obtain a slurry A with solid content of 35 wt%.
2. The slurry A is subjected to spray drying, a spray inlet temperature is controlled to be 220°C and a spray outlet temperature is controlled to be 90°C, a particle size D50 of a spray particle is controlled to be 30 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 320°C, 400°C, 460°C and 520°C, a low-temperature sintering section with heating time of 6 h and temperature of 760°C, a high-temperature sintering section with heating time of 5 h and temperature of 790°C and a cooling section with heating time of 3 h and temperature gradually decreasing from 700°C, 620°C, 500°C and 380°C are provided in sequence in a feeding direction of the roller-hearth furnace.
4. After the sintering is started, the flow rate in a nitrogen main pipe is kept constant at 315 Nm³/h, the opening of a nitrogen inlet valve at each of the low-temperature sintering section and high-temperature sintering section is increased, and the opening of a nitrogen inlet valve in other temperature zones is appropriately reduced, making the nitrogen flow rates in a front gas replacement chamber, the preheating section, the low-temperature sintering section, the high-temperature sintering section, the cooling section, a rear gas replacement chamber and a heating and roller bar window be 8%, 12%, 21%, 24%, 12%, 12%, 11% of the total pipe flow rate, respectively. A position of the material is observed through an observation window of the roller-hearth furnace, when the material reaches the low-temperature sintering section and the high-temperature sintering section, respectively, the gas is extracted from the two heating sections to an aluminum foil gas bag with a capacity of 2L, and the gas composition and content in the gas bag are analyzed by GC-MS. After adjusting the nitrogen flow rate in each temperature zone, the main gas content in the low-temperature sintering section is as follows: N₂ is 95.82%, O₂ is 0.29%, CO is 0.3%, CO₂ is 3.03%, and H₂ is 0.27%; the main gas content in the high-temperature sintering section is as follows: N₂ is 97.60%, Oz is 0.24%, CO is 0.26%, CO₂ is 1.38%, and H₂ is 0.31%. A sintered material C is obtained after sintering is completed.
5. The sintered material C obtained in Step 4 is subjected to air jet pulverization, and the particle size D50 is controlled to be 1.05 µm, so as to obtain a finished lithium iron phosphate product D with low iron phosphide content.

### Embodiment 3

A lithium iron phosphate material is prepared in this embodiment, specifically including the following steps:
1. 170 kg of iron phosphate with a Fe/P molar ratio of 0.98, 43 kg of lithium carbonate, 14 kg of glucose, 5 kg of polyethylene glycol, 800 g of titanium dioxide and deionized water are mixed and then subjected to sand milling at 30°C, a sand-milling particle size D50 is controlled to be 0.36 µm to obtain a slurry A with solid content of 33 wt%.
2. The slurry A is subjected to spray drying, a spray inlet temperature is controlled to be 225°C and a spray outlet temperature is controlled to be 95°C, a particle size D50 of a spray particle is controlled to be 32 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 330°C, 390°C, 470°C and 540°C, a low-temperature sintering section with heating time of 8 h and temperature of 740°C, a high-temperature sintering section with heating time of 4 h and temperature of 780°C and a cooling section with heating time of 3 h and temperature gradually decreasing from 700°C, 600°C, 480°C and 350°C are provided in sequence in a feeding direction of the roller-hearth furnace.
4. After the sintering is started, the flow rate in a nitrogen main pipe is kept constant at 310 Nm³/h, the opening of a nitrogen inlet valve at each of the low-temperature sintering section and high-temperature sintering section is increased, and the opening of a nitrogen inlet valve in other temperature zones is appropriately reduced, making the nitrogen flow rates in a front gas replacement chamber, the preheating section, the low-temperature sintering section, the high-temperature sintering section, the cooling section, a rear gas replacement chamber and a heating and roller bar window be 10%, 12%, 20%, 23%, 12%, 12%, 11% of the total pipe flow rate, respectively. A position of the material is observed through an observation window of the roller-hearth furnace, when the material reaches the low-temperature sintering section and the high-temperature sintering section, respectively, the gas is extracted from the two heating sections to an aluminum foil gas bag with a capacity of 2L, and the gas composition and content in the gas bag are analyzed by GC-MS. After adjusting the nitrogen flow rate in each temperature zone, the main gas content in the low-temperature sintering section is as follows: N₂ is 94.63%, Oz is 0.36%, CO is 0.44%, COz is 3.13%, and Hz is 0.56%; the main gas content in the high-temperature sintering section is as follows: N₂ is 96.27%, Oz is 0.28%, CO is 0.29%, COz is 2.65%, and H₂ is 0.31%. A sintered material C is obtained after sintering is completed.
5. The sintered material C obtained in Step 4 is subjected to air jet pulverization, and the particle size D50 is controlled to be 1.05 µm, so as to obtain a finished lithium iron phosphate product D with low iron phosphide content.

### Comparative example 1

A lithium iron phosphate material is prepared in this embodiment, specifically including the following steps:
1. 160 kg of iron phosphate with a Fe/P molar ratio of 0.97, 41 kg of lithium carbonate, 13 kg of glucose, 7 kg of polyethylene glycol, 500 g of titanium dioxide, 150 g of ammonium metavanadate and deionized water are mixed and then subjected to sand milling at 30°C, and a sand-milling particle size D50 is controlled to be 0.33 µm to obtain a slurry A with solid content of 35 wt%.
2. The slurry A is subjected to spray drying, a spray inlet temperature is controlled to be 220°C and a spray outlet temperature is controlled to be 90°C, a particle size D50 of a spray particle is controlled to be 35 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 300°C, 370°C, 440°C and 500°C, a sintering section with heating time of 10 h and temperature of 800°C and a cooling section with heating time of 3 h and temperature gradually decreasing from 710°C, 640°C, 520°C and 390°C are provided in sequence in a feeding direction of the roller-hearth furnace. A sintered material C is obtained after sintering is completed.
4. The sintered material C obtained in Step 3 is subjected to air jet pulverization to obtain a finished lithium iron phosphate product D with a particle size D50 of 1.10 µm.

FIG. 3 is an SEM image of a lithium iron phosphate material prepared according to Comparative example 1. As can be seen from figure that there are many gaps between primary particles, and the surface morphology of particles is also poor.

FIG. 5 is an XRD pattern of a lithium iron phosphate material prepared according to Comparative example 1 of the present disclosure. As can be seen from FIG. 5 that there is impurity phase Fe₂P.

### Comparative example 2

A lithium iron phosphate material is prepared in this embodiment, specifically including the following steps:
1. 180 kg of iron phosphate with a Fe/P molar ratio of 0.965, 45 kg of lithium carbonate, 10 kg of sucrose, 8 kg of citric acid, 600 g of ammonium metavanadate and deionized water are mixed and then subjected to sand milling at 30°C, and a sand-milling particle size D50 is controlled to be 0.33 µm to obtain a slurry A with solid content of 35 wt%.
2. The slurry A is subjected to spray drying, a spray inlet temperature is controlled to be 220°C and a spray outlet temperature is controlled to be 90°C, a particle size D50 of a spray particle is controlled to be 30 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 300°C, 370°C, 440°C and 500°C, a sintering section with heating time of 14 h and temperature of 760°C and a cooling section with heating time of 3 h and temperature gradually decreasing from 710°C, 640°C, 520°C and 390°C are provided in sequence in a feeding direction of the roller-hearth furnace. A sintered material C is obtained after sintering is completed.
4. The sintered material C obtained in Step 3 is subjected to air jet pulverization to obtain a finished lithium iron phosphate product D with a particle size D50 of 1.10 µm.

FIG. 4 is an SEM diagram of a lithium iron phosphate material prepared according to Comparative example 2. As can be seen from figure that there are many gaps between primary particles, and the surface morphology of particles is also poor.

### Comparative example 3

A lithium iron phosphate material is prepared in this embodiment, specifically including the following steps:
1. 170 kg of iron phosphate with a Fe/P molar ratio of 0.98, 43 kg of lithium carbonate, 14 kg of glucose, 5 kg of polyethylene glycol, 800 g of titanium dioxide and deionized water are mixed and then subjected to sand milling at 30°C, a sand-milling particle size D50 is controlled to be 0.36 µm to obtain a slurry A with solid content of 33 wt%.
2. The slurry A is subjected to spray drying, a spray inlet temperature is controlled to be 225°C and a spray outlet temperature is controlled to be 95°C, a particle size D50 of a spray particle is controlled to be 32 µm, and a moisture content is controlled to be less than or equal to 1.5%, so as to obtain precursor powder B to be sintered.
3. The precursor powder B is put into a graphite sagger according to the loading capacity of 6 kg per sagger and then is sintered in a nitrogen sealed roller-hearth furnace. Prior to sintering, a preheating section with heating time of 3 h and temperature gradually increasing from 330°C, 390°C, 470°C and 540°C, a low-temperature sintering section with heating time of 8 h and temperature of 740°C, a high-temperature sintering section with heating time of 4 h and temperature of 780°C and a cooling section with heating time of 3 h and temperature gradually decreasing from 700°C, 600°C, 480°C and 350°C are provided in sequence in a feeding direction of the roller-hearth furnace.
4. After the sintering is started, the nitrogen flow rate of each region is not changed, and the flow rate in a nitrogen main pipe is 310 Nm³/h, and the nitrogen flow rates in a front gas replacement chamber, the preheating section, the low-temperature sintering section, the high-temperature sintering section, the cooling section, a rear gas replacement chamber and a heating and roller bar window are 8%, 12%, 15%, 15%, 15%, 20%, 15% of the total pipe flow rate, respectively. A position of the material is observed through an observation window of the roller-hearth furnace, when the material reaches the low-temperature sintering section and the high-temperature sintering section, respectively, the gas is extracted from the two heating sections to an aluminum foil gas bag with a capacity of 2L, and the gas composition and content in the gas bag are analyzed by GC-MS. After adjusting the nitrogen flow rate in each temperature zone, the main gas content in the low-temperature sintering section is as follows: N₂ is 93.63%, CO is 1.44%, COz is 2.13%, and Hz is 0.56%; the main gas content in the high-temperature sintering section is as follows: N₂ is 94.27%, CO is 1.29%, CO₂ is 2.65%, and H₂ is 0.31%. A sintered material C is obtained after sintering is completed.
5. The sintered material C obtained in Step 4 is subjected to air jet pulverization to obtain a finished lithium iron phosphate product D with a particle size D50 of 1.05 µm.

Further, the performance characterization methods for lithium iron phosphate materials prepared according to Embodiments and Comparative Examples are as follows.

Compaction density test method is as follows: a compaction density instrument is used for test, the mass of a test sample is 1.000±0.005 g, and a test pressure is 3 tons.

A test method for magnetic iron is as follows: a magnetic bar with magnetic field intensity of 8000-12000 GS is used to adsorb magnetic foreign matters, and lithium iron phosphate adsorbed on the magnetic bar is washed away with water. The remaining magnetic foreign matter is weighed and then dissolved into a solution with acid, and the contents of Fe and P in the remaining magnetic foreign matters are tested by ICP (inductively coupled plasma). The content of magnetic iron can be calculated by the following formula: Wmagnetic iron =(WFe-1.8*WP)*V/m, where WFe and WP are the content of Fe and P obtained in ICP test, m is the weight of the magnetic foreign matter, and v is the volume of the solution after acid dissolution.

Test method for specific capacity per gram of a button cell is as follows: lithium iron phosphate cathode materials prepared in Embodiments and Comparative Examples, Super-P and PVDF are dispersed in N-methylpyrrolidone (NMP) according to a mass ratio of 80: 10: 10, are coated on aluminum foil after being evenly dispersed by ball milling, and then are subjected to vacuum drying to prepare a positive electrode plate. Electrolyte is 1 mol/L LiPF6, in which a solvent volume ratio is EC (ethylene carbonate): DMC (dimethyl carbonate): EMC (ethyl methyl carbonate) = 1: 1: 1, a separator, which is a Celgard polypropylene film, and a metal lithium sheet, which is a negative electrode, are commonly assembled into a button half-cell. A test voltage ranges from 2.0 V to 3.75 V, and is charged to 3.75 V by a constant-current and constant-voltage charging mode, and is discharged to 2.0 V by a constant-current discharge mode. A charge-discharge current is 0.1C. Test results are as shown in the following Table 1:

**Table 1 Test results**

| | Iron phosphide content (ppm) | Compaction density (g/cm³) | 0.1C Charge specific capacity (mAh/g) | 0.1C Discharge specific capacity (mAh/g) | First coulombic efficiency |
|---|---|---|---|---|---|
| Embodiment 1 | 0.8033 | 2.418 | 159.6 | 156.4 | 98.03% |
| Embodiment 2 | 0.7634 | 2.463 | 159.1 | 155.9 | 97.99% |
| Embodiment 3 | 0.6689 | 2.449 | 160.1 | 157.2 | 98.18% |
| Comparative example 1 | 8.6424 | 2.398 | 158.1 | 153.3 | 96.96% |
| Comparative example 2 | 1.0421 | 2.436 | 157.9 | 151.2 | 95.76% |
| Comparative example 3 | 2.5209 | 2.416 | 159.4 | 154.2 | 96.86% |

Embodiments 1-3 are lithium iron phosphate with low iron phosphide content prepared according to the present disclosure, Comparative examples 1-2 are lithium iron phosphate prepared by conventional constant temperature sintering, and Comparative example 3 is lithium iron phosphate prepared by sectioned sintering without adjusting a sintering atmosphere. As can be seen from data that the compaction density, 0.1 C charge-discharge gram capacity and first coulombic efficiency of the lithium iron phosphate prepared according to the present disclosure are higher than those of the lithium iron phosphate prepared in Comparative examples, and the iron phosphide content is lower than 1 ppm. As can be seen from XRD analysis pattern that, compared with Comparative example 1, the lithium iron phosphate prepared using this process has high purity, and no impurity phase Fe2P is generated. Meanwhile, the scanning electron microscopy analysis of the products in Embodiments and the products in Comparative examples shows that FIG. 3 is lithium iron phosphate sintered at a relatively high constant temperature, which has large particles and also can form large strip-shaped iron phosphide particles, leading to the decline of product performance. FIG. 4 is lithium iron phosphate sintered at a low constant temperature. Although it is not easy to form iron phosphide, the particles are generally small and easy to agglomerate due to low sintering temperature, leading to the decrease of compaction density. However, as shown in FIG. 2, as the generation of iron phosphide is controlled by setting short high-temperature sintering section time and increasing the nitrogen flow rate at the sintering section, there are no obvious strip-shaped iron phosphide particles in the figure. Meanwhile, the large and small particles of the lithium iron phosphate prepared by the method of the present disclosure are graded, and a microscopic spherical structure similar to "pomegranate" is helpful to enhance the conductivity between particles and inside particles, so as to achieve high compaction density and specific capacity while achieving low iron phosphide content of the lithium iron phosphate.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic representations of the above terms are not necessarily aimed at the same embodiment or example. Moreover, specific features, structures, materials or characteristics described may be combined in any one or more embodiments or examples in a suitable manner. In addition, those skilled in the art can bind and combine different embodiments or examples and features of different embodiments or examples described in this specification without contradicting each other.

Although the embodiments of the present disclosure have been shown and described, those of ordinary skill in the art may understand that many changes, modifications, substitutions and variations can be made to these embodiments without departing from the principles and purposes of the present disclosure, and the scope of the present disclosure is defined by the claims and their equivalents.

## Claims

1. A preparation method for a lithium iron phosphate material with low iron phosphide content, comprising the following steps:
S10: mixing and dissolving anhydrous iron phosphate with a lithium source, a carbon source, a dopant and deionized water according to a certain proportion to obtain a mixed solution;
S20: conducting wet grinding and spray drying on the mixed solution to obtain a sintering precursor; and
S30: conducting heat treatment and pulverization on the sintering precursor to obtain a lithium iron phosphate material, wherein the heat treatment process comprises preheating, low-temperature sintering, high-temperature sintering, and cooling, a preheating temperature is lower than a low-temperature sintering temperature, the low-temperature sintering temperature is lower than a high-temperature sintering temperature, and a cooling temperature is lower than the high-temperature sintering temperature; the heat treatment is conducted under a rare gas atmosphere, and rare gas content in the high-temperature sintering is greater than that in the low-temperature sintering.

2. The preparation method according to claim 1, wherein the preheating temperature is 300°C-550°C, the low-temperature sintering temperature is 680°C-775°C, the high-temperature sintering temperature is 776°C-820°C, and the cooling temperature is 300°C-720°C; and/or
low-temperature sintering time is longer than preheating time, high-temperature sintering time and cooling time, respectively; preferably, the preheating time is 2-3 h, the low-temperature sintering time is 6-10 h, the high-temperature sintering time is 2-6 h, and the cooling time is 2-3 h.

3. The preparation method according to claim 1, wherein the rare gas atmosphere comprises nitrogen, nitrogen content in a high-temperature sintering atmosphere is more than 96%, and nitrogen content in a low-temperature sintering atmosphere is more than 94.5%.

4. The preparation method according to claim 1, wherein the heat treatment further comprises detecting content of other gases in the rare gas atmosphere, and the other gases comprise at least one of oxygen, carbon oxide, carbon dioxide, and hydrogen.

5. The preparation method according to claim 1, wherein the heat treatment is conducted in a nitrogen sealed roller-hearth furnace, which comprises a front gas replacement chamber, a preheating section, a low-temperature sintering section, a high-temperature sintering section, a cooling section, a rear gas replacement chamber, and a heating and roller bar window; gas intake of a nitrogen main pipe of the roller-hearth furnace is from 290 Nm³/h to 330 Nm³/h, and nitrogen intake at the front gas replacement chamber accounts for 8%-10% of total gas intake, nitrogen intake at the preheating section accounts for 10%-20% of the total gas intake, nitrogen intake at the low-temperature sintering section accounts for 15%-20% of the total gas intake, nitrogen intake at the high-temperature sintering section accounts for 20%-25% of the total gas intake, nitrogen intake in the cooling section accounts for 8%-12% of the total gas intake, nitrogen intake at the rear gas replacement chamber accounts for 8%-15% of the total gas intake, and nitrogen intake at the heating and roller bar window accounts for 8%-12% of the total gas intake.

6. The preparation method according to claim 5, wherein a temperature set in the preheating section gradually increases with a feeding direction, a temperature set in each of the low-temperature sintering section and the high-temperature sintering section keeps constant with the feeding direction, and a temperature set in the cooling section gradually decreases with the feeding direction.

7. The preparation method according to claim 1, wherein an iron-phosphorus molar ratio Fe/P of the anhydrous iron phosphate is 0.96-0.98; and/or
the lithium source comprises at least one of lithium carbonate, lithium phosphate, and lithium hydroxide, a molar ratio Li/Fe of the lithium source to the iron phosphate is 1.01-1.07; and/or
the carbon source comprises at least one of glucose, sucrose, polyethylene glycol, and citric acid, an adding amount of the carbon source satisfies a target that carbon content of the prepared lithium iron phosphate material is 1.0 wt%-1.8 wt%; and/or
the dopant comprises at least one of titanium dioxide, and ammonium metavanadate; and an adding amount of titanium dioxide and ammonium metavanadate accounts for 0.05 wt%-0.20 wt% of the mass of iron phosphate.

8. The preparation method according to claim 1, wherein the wet grinding is conducted at a temperature of 30°C-45°C, a grinding particle size D50 is less than 0.5 µm, and solid content is from 30 wt% 45 wt%; and/or
in the spray drying, an air inlet temperature is 180°C-240°C, an air outlet temperature is 90°C-110°C, a particle size D50 of an intermediate product obtained by spray drying is 20 µm-45 µm, and a moisture content is less than or equal to 1.5%.

9. A lithium iron phosphate material, wherein the lithium iron phosphate material is prepared by the preparation method according to any one of claims 1 to 8.

10. A lithium-ion battery, wherein the lithium-ion battery comprises a battery cathode prepared from the lithium iron phosphate material according to claim 9.
